# EUROPEAN PATENT APPLICATION

(11) **EP 2 067 751 A1**
(43) Date of publication of application: **10.06.2009**
(21) Application number: 08019576.1
(22) Date of filing: 08.11.2008
(51) Int. Cl.: C03B 19/01, C03B 19/09

(54) **Method and device for manufacturing silica glass**

(30) Priority: 30.11.2007 JP 2007310240
(71) Applicant: Heraeus Quarzglas GmbH & Co. KG, 63450 Hanau (DE); Shin-Etsu Quartz Products Co.,Ltd., Shinjuku-ku Tokyo 160-0023 (JP)
(72) Inventor: Sato, Tatsuhiro, Koriyama-shi 963-0101 (JP); Yoshida, Nobumasa, Fukushima 963-0701 (JP); Andou, Masaki, Fukushima 963-0201 (JP)
(74) Representative: Kühn, Hans-Christian

(57) **Abstract**

The present invention refers to a method and device for manufacturing silica glass in which a silica glass powder is dropped from a powder supply device above a rotating furnace and layered in a centre portion of a furnace bottom, and then heat-fused and expanded in an outer circumferential direction of the furnace to form an ingot, the drop position and a fusion position of the silica glass powder is dispersed in the bottom portion of the furnace. The drop position of the silica glass powder is displaced from the centre portion of the bottom portion of the furnace, and the silica glass powder is preferably dispersed in the bottom portion of the furnace by the rotational movement of one or both of the powder supply device and the bottom portion of the furnace. The method and device for manufacturing silica glass facilitate the simple manufacture of a highly pure, bubble-free large flat-plate silica glass ingot in a short time.

## Description

The present invention relates to a method and device for manufacturing a flat-plate silica glass ingot.

### Prior Art

While various methods of manufacturing silica glass comprising the use of heat to fuse a silica glass powder and the adoption of a hydrogen-oxygen or propane-oxygen or similar flame, or an arc, high-frequency or vacuum electric furnace or the like as the heat source are available, in common methods for manufacturing a shell-type rod-shaped silica glass ingot as described in, for example, Japanese Laid-Open Patent Application 48 - 007860, a fused silica glass is deposited on a rotating target and layered by lowering and cooling a deposition portion at a fixed speed. In addition, while methods for fusing a silica glass powder comprising the use a plasma arc and a powder being layered on a rotating base are available as described in Japanese Laid-Open Patent Application 04 - 325425, in each case the manufactured ingot is a long, narrow rod shape.

While silica glasses of low impurity that do not chemically react, or more particularly silica glasses obtained by fusing a silica glass powder, are widely employed in devices for the manufacture of semiconductors because of their much better heat-resistance than synthetic silica glasses, increases in semiconductor wafer size have occurred with the aim of increasing semiconductor manufacturing efficiency and, accompanying this, even larger silica glass ingots are demanded. However, silica glass ingots manufactured by conventional methods of manufacture describe a long rod-like shape with a small cross-section and, accordingly, are unsuitable for the manufacture of silica glass products of large diameter.

While methods comprising remelting and moulding rod-shaped ingots into large ingots have been adopted for this reason, the lowered purity and homogeneity produced by a secondary moulding contamination attributable to fine bubble and impurity adulteration and the generation of warp is an inherent problem in these methods, and a method for the direct manufacture of large ingots comprising the fusion of silica glass powder in the absence of the need for remoulding is desired.

In addition, Japanese Laid-Open Patent Application 2001 - 342026 proposes a method in which, subsequent to silica glass powder deposition, an ingot formed into a rod shape is heated by an auxiliary heating burner alone and then flow-deformed into a plate shape. However, problems inherent to this method include the time and effort necessitated by its implementation and, in turn, the costs accompanying the need to implement both a powder deposition step and an ingot-flattening step in the ingot-moulding step and, in addition, the localized generation of contamination on the upper portion of the ingot from the upper surface of the furnace due to an accumulation of heat that occurs during the flow in the upper portion of the ingot.

### Problems to be Solved by the Invention

It is an object of the present invention to provide a method for manufacturing silica glass and a device for manufacturing silica glass that facilitates the simple manufacture of a highly pure, bubble-free large flat-plate silica glass ingot in a short time.

### Means to Solve the Problems

Enthusiastic research carried out by the inventors with the aim of resolving the problems described above led to the discovery that a large diameter plate-shaped ingot could be easily produced by dispersedly dropping and layering a silica glass powder over the entire region of a rotating furnace bottom, and heat-fusing the same.

That is to say, the method for manufacturing silica glass of the present invention is characterized in that, in a method for manufacturing silica glass in which a silica glass powder is dropped from a powder supply device above a rotating furnace and layered in a centre portion of a furnace bottom, and is then heat-fused and expanded in an outer circumferential direction of the furnace to form an ingot, the drop position and fusion position of the silica glass powder is dispersed in the bottom portion of the furnace.

It is preferable that the drop position of said silica glass powder is displaced from a centre portion of the bottom portion of the furnace, and that the silica glass powder is dispersed in the bottom portion of the furnace by the rotational movement of one or both of the aforementioned powder supply device and the aforementioned bottom portion of the furnace, and it is preferable that the deposition speed of the silica glass powder on the bottom portion of the furnace is (0.5 to 20kg/hr)/r.p.m.

The aforementioned powder supply device ideally comprises a hopper and a plurality of powder supply burners for supplying the silica glass powder to the furnace.

It is preferable that the powder supply line from the aforementioned hopper to the aforementioned powder supply burners of the aforementioned powder supply device is an airtight system, that an inert gas and/or oxygen gas is supplied to the powder supply line, and that the powder supply line is pressurized. It is preferable that a total supplied amount (that is to say, the total amount of both the inert gas and oxygen gas where both are supplied to the powder supply line, the supplied amount of the inert gas where it alone is supplied, and the supplied amount of oxygen gas where it alone is supplied) of inert gas and oxygen gas of the aforementioned powder supply line is in a range of from 0.05 (m³/hr)/(kg/hr) to 10(m³/hr)/(kg/hr) for a supplied amount of silica glass powder of 1 kg/hr. While there are no limitations to the pressure conditions of the aforementioned powder supply line, it is desirable that the aforementioned powder supply line is pressurized to a pressure of 1 to 400mmHg.

It is preferable that the powder dispersion density of the silica glass powder on the bottom portion of the furnace is in a range 1 to 51 g /(hr· cm²).

It is preferable that the bottom portion of the furnace rotates, and that the powder deposition position formed by the aforementioned powder supply device lies on a turning circle other than the centre portion of the bottom portion of the furnace. In addition, it is desirable that the aforementioned powder supply device comprises a plurality of powder supply burners, and sets the powder deposition portion to circles of different radii.

It is preferable that the powder supply burner provided in the aforementioned powder supply device is a silica glass burner.

It is preferable that the aforementioned silica glass powder includes at least 0.01 to 20wt% of at least one type of metal element. A silica glass ingot doped with a metal element can be produced by employing a silica glass powder in which a metal element has been mixed.

While there are no particular limitations to the metal element, it is ideally a mixture of at least one type of Group 3B metal element and at least one type of (lanthanoid, actinoid, Ti, Zr, Hf).

When a metal-doped silica glass ingot is to be manufactured, it is preferable that the powder supply device for supplying the silica glass powder and the metal element supply device for supplying the metal element are separately employed.

The device for manufacturing silica glass of the present invention is characterized in that, in a device for manufacturing silica glass comprising a rotatable furnace and a powder supply device provided above the furnace, the powder supply device includes a hopper and one or a plurality of powder supply burners for supplying a silica glass powder to the furnace, and at least one of the aforementioned powder supply burners is disposed in such a way as to displace the drop position of the silica glass powder from the centre portion of the bottom portion of the furnace.

It is preferable that the aforementioned powder supply device is rotatable.

The drop position and fusion position of the silica glass powder can be dispersed on the bottom portion of the furnace by the displacement of the deposition position of the silica glass powder deposited on the bottom portion of the furnace from the aforementioned powder supply burners from the centre portion on the bottom portion of the furnace, and the rotation of one or both of the bottom portion of the furnace and powder supply device.

The device for manufacturing silica glass of the present invention further comprises gas supply means for supplying an inert gas and/or oxygen gas to a powder supply line from the aforementioned hopper to the aforementioned powder supply burners.

### Effect of the Invention

According to the present invention, a large diameter silica glass ingot free of contamination and bubbles can be obtained easily and directly, and at high speed in a short time.

### Best Mode for Carrying out the Invention

While embodiment modes of the present invention will be hereinafter described with reference to the diagrams, it should be understood that the examples shown in the diagrams are provided for the purposes of illustration alone, and that modifications within the technical concept of the invention may be made thereto.

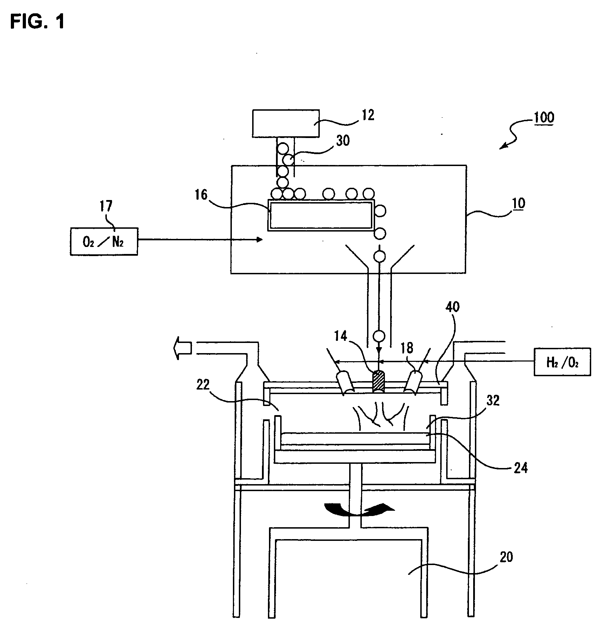

FIG. 1 is a schematic explanatory diagram of a first mode of a device for manufacturing silica glass of the present invention.

The symbol 100 in FIG. 1 denotes a first mode of the device for manufacturing silica glass of the present invention comprising a rotatable furnace 20, and a powder supply device 10 provided above the furnace 20. The powder supply device 10 comprises a hopper 12 and a powder supply burner 14, and the powder supply burner 14 is installed in such a way that the burner tip-end projects from the furnace roof into a hole provided in a heat-resistant brick of the roof (ceiling plate) 40 of the furnace 20.

While a known furnace is able to be used as the furnace 20 of the device for manufacturing silica glass 100 of the present invention, the furnace side wall 22 is preferably constituted from silicon carbide-based refractory heat-resistant bricks, and the furnace floor 24 is preferably constituted from zirconia-based refractory heat-resistant bricks. In addition, the upper portion of the furnace roof 40 is ideally cooled using a cooling plate.

A raw material silica glass powder 30 is stored in the hopper 12, and is ideally maintained in a normal pressure state in the hopper 12 with a small amount of N₂ gas being caused to flow from the upper portion.

In the device for manufacturing silica glass 100 of the present invention as shown in FIG. 1, it is preferable that a powder conveying portion 16 such as a rotating belt is arranged on the lower side of the hopper 12 with the perimeter thereof forming a box shape, that a powder supply line from the hopper 12 to the furnace supply burner 14 is formed as an airtight system, and that an inert gas and/or oxygen gas is caused to flow into the box by gas supply means 17. The combined use of an inert gas and oxygen gas is preferred, the preferred flow ratio thereof being a N₂:O₂ volume ratio between 9:1 and 4:6. Furthermore, the supplied gas flow rate thereof is preferably in the range of from 0.05 (m³/hr)/(kg/hr) to 10 (m³/hr)/(kg/hr), and more preferably in the range of from 0.2 (m³/hr)/(kg/hr) to 5(m³/hr)/(kg/hr) to a silica powder supplied in the amount of 1 kg/hr. The inert gas and oxygen gas flowing into the box affords a stabilizing effect on the powder flow and a temperature-retaining effect on the powder deposition section of the furnace. While the use of nitrogen as the inert gas is ideal, apart from nitrogen, argon and helium and so on are also usable.

In addition, the airtight powder supply system is ideally subjected to a pressure condition, and the applied pressure is preferably 1 to 400mm Hg, and more preferably 20 to 200mm Hg. Backflow of hydrogen gas from the powder supply burner into the box can be prevented by pressurizing the powder supply line.

The silica glass powder 30 is supplied from the hopper 12 to the powder conveying portion 16, the powder conveying portion 16 drops the silica glass powder into the powder supply lines, and the silica glass powder 30 is supplied to the base portion of the furnace 20 by the powder supply burner 14 provided in the end of the powder supply lines. The powder supply speed of each line is preferably adjusted within the range 50 g /hr to 50kg/hr, and more preferably the range 1 kg/hr to 20kg/hr.

As the silica glass powder 30 serving as the silica glass raw material, a silica glass powder obtained by sintering a silica obtained by the hydrolysis of silica, silica sand, crystal powder or silicon alkoxide using hydrochloric acid or an ammonia catalyst, or a silica glass powder obtained by refining and sintering a silica obtained by reacting an aqueous solution of an alkali-metal silicate with an acid may be used. In addition, the particle size of the silica glass powder is preferably within the range 40 to 250 mesh, and more preferably 80 to 100 mesh.

In addition, a high concentration metal-doped silica glass ingot can be manufactured by the addition of a metal element to the raw material silica glass powder 30, and the use of a silica glass powder in which this metal element has been mixed. The density of the metal element in the silica glass powder is preferably 0.01 to 20wt%, and examples of the metal element include a mixture of at least one type of Group 3B metal element and at least one type of (lanthanoid, actinoid, Ti, Zr, Hf)·

At least one, and preferably a plurality and more preferably at least two but no more than five of the aforementioned powder supply burners 14 are arranged on the upper portion of the furnace wall with potential for the number on the upper portion of the furnace wall to be increased. Known burners made of silica glass and which comprise a hydrogen and oxygen supply pipe and a silica glass powder supply pipe may be employed as the powder supply burners 14. The symbol 18 in FIG. 1 denotes an auxiliary heating burner (temperature-retaining burner) for heating the furnace of which at least one, and more preferably a plurality, are arranged on the upper portion of the furnace wall, with potential for the number on the upper portion of the furnace wall to be increased. The powder supply burners 14 and auxiliary heating burners 18 are ideally provided in plurality in accordance with the size of the ingot to be manufactured, that is to say, in accordance with the size of the furnace.

In the method for manufacturing silica glass of the present invention, the drop position and fusion position of the silica glass powder is not fixed to a constant location in the furnace and instead is dispersed on the bottom portion of the furnace. The powder dispersion density of the silica glass powder dispersedly dropped on the bottom portion of the furnace is preferably in the range 1 to 51g/(hr· cm²), and more preferably in the range 5 to 30g/(hr· cm²).

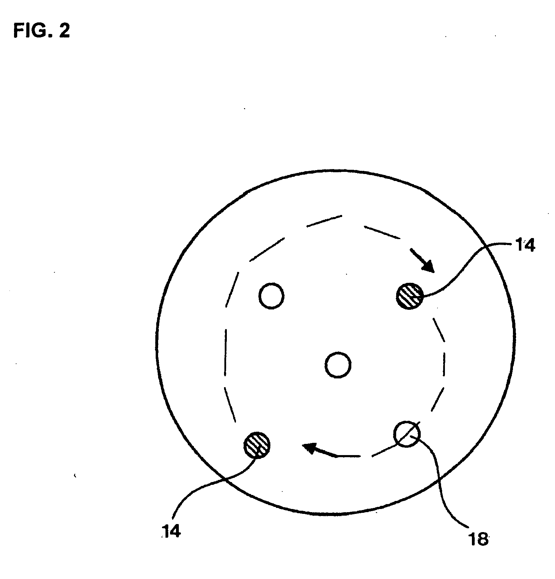

The method for dispersing the drop position and fusion position of the silica glass powder on the bottom portion of the furnace preferably comprises, for example, the silica glass powder deposition position being displaced from the centre portion of the bottom portion of the furnace, and the silica glass powder being dispersed on the bottom portion of the furnace by the rotational movement of either the powder supply device or the bottom portion of the furnace or both. FIG. 2 is a schematic diagram of the upper surface portion of the furnace showing the deposition state of the silica glass powder in which the arrow indicates the state in which the deposition position moves. The symbol 14 in FIG. 2 denotes the powder supply burner, and the symbol 18 denotes the auxiliary heating burner.

As shown in FIG. 2, the effects afforded by the adoption of a silica glass powder drop position other than at the centre portion bottom portion of the furnace and the rotational movement of one or both of the bottom portion of the furnace and the powder supply device is to move the silica glass powder deposition position on the bottom portion of the furnace to prevent excess deposition of the silica glass powder and to prevent the silica glass powder from being fused on the turning locus. The silica glass powder drop position is preferably a distance of at least 30mm, and more preferably a distance of at least 100mm from the centre portion of the bottom portion of the furnace.

More particularly, the use of a plurality and preferably two or more and five or fewer powder supply burners 14 and the rotation of the powder supply device is most desirable from the standpoint of facilitating a scattered dispersion of the silica glass powder and, accordingly, a homogeneous effect. If a plurality of powder supply burners are employed in the present invention, the silica glass powder drop position of at least one of the powder supply burners should be arranged away from the centre portion of the bottom portion of the furnace and, while the combined use of a powder supply burner that drops the powder onto the centre portion of the bottom portion of the furnace is also possible, all powder supply burners are preferably arranged in such a way that the silica glass powder drop position is away from the centre portion of the bottom portion of the furnace.

When one or both of the powder supply device and the bottom portion of the furnace are rotationally moved, the silica glass powder deposition speed ideally allows for the powder to be dispersedly dropped at (0.5 to 20kg/hr)/r.p.m. and preferably at (1 to 10kg/hr)/r.p.m. In this case, the powder deposition portion of the bottom portion of the furnace is set on a turning circle avoiding the centre of the bottom portion of the furnace. More particularly, when a plurality of powder supply burners and a plurality of powder deposition portions are employed, these deposition portions preferably lie on circles of different radii. This setting allows the rotational deposition speed noted above to be maintained, and ensures that the deposited powder is softened in the absence of the formation of bubbles. The rotational movement occurs simultaneously therewith and, during the rotational movement, a transparent glass is formed using the oxyhydrogen auxiliary heating burner alone. The symbol 22 in FIG. 1 denotes the silica glass deposited on the furnace floor. A layered, heat-fused and transparent silica glass ingot is able to be produced across the whole of the furnace base.

In this way, a silica glass ingot having few bubbles is able to be manufactured. While the original flame-fusing method is advantageous in terms of facilitating the manufacture of a silica glass of comparatively fewer bubbles because the silica glass powder is continually dropped and the silica glass powder is fused at the drop point by the heat capacity of the fused-state silica glass, there are problems inherent to the use of the conventional method for producing an ingot in that, in order to produce a large-diameter ingot, a supplementary heat or reheating treatment for which the time and costs necessitated thereby are excessive and which is a cause of contamination is required. However, a large-diameter silica glass ingot free of contamination can be obtained directly and at high speed and in a short time using the method of the present invention.

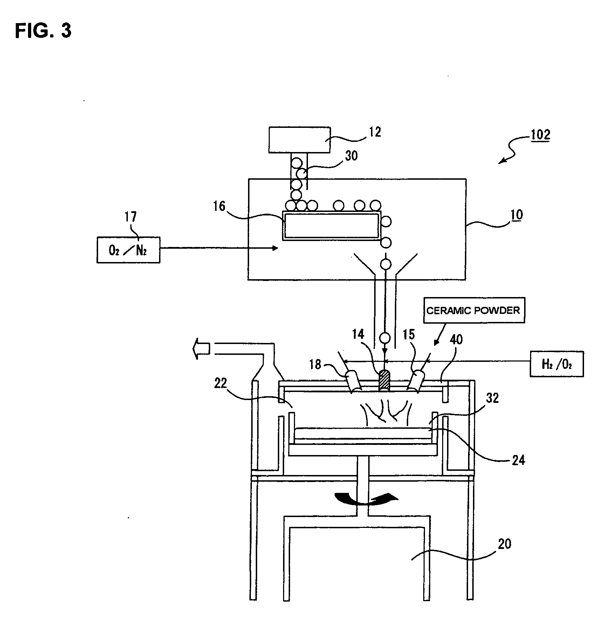

FIG. 3 is a schematic explanatory diagram of a second mode of a device for manufacturing silica glass of the present invention. The symbol 102 in FIG. 3 denotes the second mode of a device for manufacturing silica glass of the present invention which comprises a metal element supply device, for example, a metal element supply burner 15, for supplying a metal element to the furnace. While a silica glass powder doped with a metal element may be used if, as shown in the diagram, a silica glass doped with a metal element is to be manufactured, the metal element supply burner 15 may be separately employed as shown in FIG. 3. By way of example, a metal-doped silica glass ingot may be manufactured by supplying a ceramic powder containing a desired metal element to the metal element supply burner 15, and dropping the ceramic powder in the vicinity of a flame in proximity of the flame tip of the powder supply burner 14 by way of the metal element supply burner 15. The remaining configuration of this device is identical to the configuration of the first mode of the device for manufacturing a silica glass as described above and, accordingly, a description thereof has been omitted.

### Examples

While the present invention will be hereinafter more specifically described with reference to the working examples thereof, it should be understood that the working examples are provided for illustrative purposes only and that the present invention is not limited thereto.

### Working Example 1

A silica glass ingot was produced employing the device for manufacturing silica glass shown in FIG. 1.

Employing three temperature-retaining silica glass burners and two powder supply silica glass burners, hydrogen and oxygen were supplied to the burners (H₂ supply speed: 10m³/hr, O₂ supply speed:4m³/hr), silica glass powder was supplied to the powder supply silica glass burner (silica glass powder supplied amount: 15kg/hr/burner), N₂ and O₂ gas were each flowed to the powder supply lines of the burners at 5.0m³/Hr and, with the pressure in the powder supply box maintained at 100mmHg, the silica glass powder was heat-fused, dropped onto a bottom portion of a Bernoulli furnace rotating at 5r.p.m. and deposited for 3.5 hours to produce a silica glass ingot. The drop position of the silica glass powder from the two powder supply silica glass burners onto the bottom portion of the furnace was set 50mm from the center portion of the furnace base and 80mm from the center portion of the furnace base to afford deposition of the silica glass powder on circles of different radii.

The ingot was deposited and fused at 30kg/hr producing a 100kg ingot of diameter 600mm and thickness 160mm (powder dispersion density: approximately 10.6 g/(hr· cm²). There were no bubbles of size greater than 0.3mm observed in the ingot interior. The purity of the ingot was analysed to a depth of 10mm from the upper surface using an ICP-AES, and for Na, Al, K, Ca, Cu, Ni and Cr there was no difference between the thus-obtained result and the purity analysis result obtained at depth positions of 10mm or more.

### Working Example 2

Apart from the employment of five temperature-retaining burners and five powder supply silica glass burners, and the alteration of the powder supply amount to 6kg/hr/burner, this Working Example was carried out in the same way as Working Example 1 and, in addition, an identical effect was produced thereby. The drop position of the silica glass powder from the five powder supply silica glass burners onto the bottom portion of the furnace was set to 30mm, 80mm, 130mm, 180mm and 230mm from the centre portion of the furnace base to afford the deposition of the silica glass powder on five circles of different radii.

### Working Example 3

Apart from the employment of a silica glass powder obtained by mixing Al₂O₃:6wt% and Y₂O₃:2wt% as the silica glass powder supplied to the powder supply silica glass burner, this Working Example was carried out in the same way as Working Example 1 and, in addition, an identical effect was produced thereby.

### Working Example 4

A silica glass ingot was produced employing the device for manufacturing silica glass shown in FIG. 3. Apart from the employment of the device for manufacturing silica glass shown in FIG. 3, and the production of a silica glass ingot as a ceramic mixture powder obtained by mixing an Al₂O₃ and a Y₂O₃ powder in a weight ratio of 2:1 is being dropped from a metal element supply burner at 1 kg/hr into a flame of a flame tip end 50mm from the powder supply silica glass burner, this Working Example was carried out in the same way as Working Example 1 and, in addition, an identical effect was produced thereby.

### Comparative Example 1

Employing a single silica glass burner, a silica glass powder was dropped while being heat-fused onto a centre portion of the base of a Bernoulli furnace at a silica glass powder supplied amount:3kg/hr and gas supply speeds of H₂:10m³/hr,O₂:5m³/hr and deposited for 35 hours whereupon, after a 100kg ingot of diameter 400mm and length 370mm was produced, the powder supply was stopped and the ingot was subjected to heat alone and softened to produce a flattened silica glass ingot of diameter 600mm and thickness 160mm. Bubbles of size in excess of 0.3mm were observed in the amount of 100p/100cm³ in the ingot interior. The purity of the ingot was analysed to a depth of 10mm from the upper surface using an ICP-AES, and for each of Na, Al, K, Ca, Cu, Ni and Cr, an increase between the thus-obtained result and the purity analysis result obtained at depth positions of 10mm or more of the order of 0.1 ppm was found.

### Brief Description of the Drawings

FIG. 1 is a schematic explanatory diagram showing one example of a device for manufacturing silica glass of the present invention;
FIG. 2 is a schematic diagram of a furnace upper portion showing the deposited state of a silica glass powder; and
FIG. 3 is a schematic explanatory diagram showing another example of the device for manufacturing silica glass of the present invention.

### Explanation of Symbols:

100, 102: Device for manufacturing silica glass of the present invention
10: Powder supply device
12: Hopper
14: Powder supply burner
15: Metal element supply burner
16: Powder conveying portion
17: Gas supply means
18: Auxiliary heating burner
20: Furnace
22: Furnace side wall
24: Furnace floor
30: Silica glass powder
32: Deposited silica glass
40: Ceiling plate.

## Claims

1. Method for manufacturing silica glass in which a silica glass powder is dropped from a powder supply device above a rotating furnace and layered in a centre portion of a furnace bottom, and then is heat-fused and expanded in an outer circumferential direction of the furnace to form an ingot, **characterized in that** a drop position and a fusion position of the silica glass powder is dispersed in the bottom portion of the furnace.

2. Method for manufacturing silica glass according to Claim 1, **characterized in that** a drop position of said silica glass powder is displaced from a centre portion of the bottom portion of the furnace, and the silica glass powder is dispersed in the bottom portion of the furnace by a rotational movement of one or both of said powder supply device and said bottom portion of the furnace.

3. Method for manufacturing silica glass according to Claim 2, **characterized in that** a deposition speed of the silica glass powder on the bottom portion of the furnace is set in the range of from 0.5 (kg/hr)/r.p.m. to 20 (kg/hr)/r.p.m.

4. Method for manufacturing silica glass according to any of Claims 1 to 3, **characterized in that** said powder supply device comprises a hopper and a plurality of powder supply burners for supplying a silica glass powder to the furnace.

5. Method for manufacturing silica glass according to Claim 4, **characterized in that** a powder supply line from said hopper to said powder supply burners of said aforementioned powder supply device is an airtight system, an inert gas and/or oxygen gas is supplied to the powder supply line, and the powder supply line is pressurized.

6. Method for manufacturing silica glass according to Claim 5, **characterized in that** a total supplied amount of inert gas and oxygen gas of said powder supply line is in a range of from 0.05 (m³/hr)/(kg/hr) to 10(m³/hr)/(kg/hr) for a supplied amount of silica glass powder of 1kg/hr.

7. Method for manufacturing silica glass according to Claim 5 or 6, **characterized in that** a pressure of 1 to 400mmHg is applied to said powder supply line.

8. Method for manufacturing silica glass according to any of Claims 1 to 7, **characterized in that** a powder dispersion density of the silica glass powder on the bottom portion of the furnace is in a range of from 1 to 51 g /(hr· cm²).

9. Method for manufacturing silica glass according to any of Claims 1 to 8, **characterized in that** the bottom portion of the furnace rotates, and a powder deposition position formed by said powder supply device lies on a turning circle other than the centre portion of the bottom portion of the furnace.

10. Method for manufacturing silica glass according to Claim 9, **characterized in that** said powder supply device comprises a plurality of powder supply burners, and sets powder deposition portions to circles of different radii.

11. Method for manufacturing silica glass according to any of Claims 1 to 10, **characterized in that** the powder supply burner provided in said powder supply device is a silica glass burner.

12. Method for manufacturing silica glass according to any of Claims 1 to 11, **characterized in that** said silica glass powder contains 0.01 to 20wt% of at least one type of metal element.

13. Method for manufacturing silica glass according to Claim 12, **characterized in that** said metal element is a mixture of at least one type of Group 3B metal element and at least one type of lanthanoid, actinoid, Ti, Zr or Hf.

14. Method for manufacturing silica glass according to Claims 12 or 13, **characterized in that** the powder supply device for supplying the silica glass powder and a metal element supply device for supplying the metal element are separately employed.

15. Device for manufacturing silica glass comprising a rotatable furnace and a powder supply device provided above the furnace, **characterized in that** the powder supply device includes a hopper and one or a plurality of powder supply burners for supplying a silica glass powder to the furnace, at least one of said powder supply burners being disposed in such a way as to displace a drop position of the silica glass powder from the centre portion of the bottom portion of the furnace.

16. Device for manufacturing silica glass according to Claim 15, further comprising gas supply means for supplying an inert gas and/or oxygen gas to a powder supply line from said hopper to said powder supply burners.

17. Device for manufacturing silica glass according to Claims 15 or 16, **characterized in that** said powder supply device is rotatable.
